# EUROPEAN PATENT APPLICATION

(11) **EP 4 582 311 A1**
(43) Date of publication of application: **09.07.2025**
(21) Application number: 23869879.9
(22) Date of filing: 30.06.2023
(51) Int. Cl.: B60R 11/04, B60R 11/02, B60R 1/12, B60R 11/00

(54) **VEHICLE-MOUNTED CAMERA MODULE, CAMERA MOUNTING BRACKET, AND VEHICLE**

(30) Priority: 30.09.2022 CN 202211216265
(71) Applicant: Shenzhen Yinwang Intelligent Technologies Co., Ltd., Shenzhen, Guangdong 518129 (CN)
(72) Inventor: JIA, Wanghuan, Shenzhen, Guangdong 518129 (CN); ZENG, Jianwei, Shenzhen, Guangdong 518129 (CN); YANG, Zimo, Shenzhen, Guangdong 518129 (CN); ZHU, Xin, Shenzhen, Guangdong 518129 (CN)
(74) Representative: Pfenning, Meinig & Partner mbB
(86) International application number: PCT/CN2023/105286
(87) International publication number: WO 2024/066631

(57) **Abstract**

A vehicle-mounted camera module (1), a camera mounting bracket, and a vehicle are provided. The vehicle-mounted camera module (1) includes a support member (11), a height adjustment mechanism (12), and a camera (13). The support member (11) is fastened to a top of a cockpit. The height adjustment mechanism (12) is configured to implement switching of the camera (13) between a first state and a second state. The camera (13) in the first state is lower than an internal rear-view mirror (3) of the vehicle and lower than a height of the camera (13) in the second state. When the camera (13) needs to be used for image shooting, the camera (13) may be switched to the first state through the height adjustment mechanism (12). Because the camera (13) in the first state is lower than the internal rear-view mirror (3) of the vehicle and may be flush with a sight line of a person in the vehicle, an image shooting angle of the camera (13) is good, and a high-quality image of the person in the vehicle can be obtained. When the camera (13) does not need to be used, the camera (13) may be switched to the second state through the height adjustment mechanism (12). A height of the camera (13) rises, so that impact of the vehicle-mounted camera module (1) on a field of view of the person in the vehicle is reduced.

## Description

The present disclosure claims priority to Chinese Patent Application No. 202211216265.6, filed on September 30, 2022 and entitled "VEHICLE-MOUNTED CAMERA MODULE, CAMERA MOUNTING BRACKET, AND VEHICLE", which is incorporated herein by reference in its entirety.

### TECHNICAL FIELD

The present disclosure relates to the field of vehicle technologies, and in particular, to a vehicle-mounted camera module, a camera mounting bracket, and a vehicle.

### BACKGROUND

Currently, vehicle-mounted cameras configured to perform image shooting inside vehicles are disposed in some vehicles. This type of vehicle-mounted camera faces a cockpit. When a person in the vehicle wants to make a video call or take a photo, the vehicle-mounted camera may be started.

However, this type of vehicle-mounted camera is usually disposed at a position of a top light in the vehicle, and an image shooting angle is poor. Only the head of the person in the vehicle can be captured, and quality of a shot image is poor.

### SUMMARY

The present disclosure provides a vehicle-mounted camera module, a camera mounting bracket, and a vehicle. A camera in the vehicle-mounted camera module can be switched between a first state and a second state, and the camera in the first state is lower than an internal rear-view mirror of the vehicle. When a person in the vehicle needs to use the camera to perform image shooting, the camera may be switched to the first state. In this case, an image shooting angle of the camera is good, and a high-quality image of the person in the vehicle can be obtained. Technical solutions of the vehicle-mounted camera module, the camera mounting member, and the vehicle are described as follows.

According to a first aspect, the present disclosure provides a vehicle-mounted camera module. The vehicle-mounted camera module includes a support member, a height adjustment mechanism, and a camera. The support member is configured to be fastened to a top of a cockpit of a vehicle. The camera is connected to the support member through the height adjustment mechanism. The height adjustment mechanism is configured to implement switching of the camera between a first state and a second state. A height of the camera in the first state is lower than a height of the camera in the second state, and in the first state, the camera is lower than an internal rear-view mirror of the vehicle.

The support member is configured to support the height adjustment mechanism and the camera. The cockpit may also be referred to as a passenger cockpit.

The height adjustment mechanism is configured to implement state switching of the camera. The height adjustment mechanism may implement state switching by driving the camera to slide, or may implement state switching by driving the camera to rotate. This is not limited in the present disclosure.

The camera in the first state may be configured to shoot an image, and the first state may also be referred to as an image shooting state or a working state. The camera in the second state may not be configured to shoot an image, and the second state may also be referred to as a stowed state, a non-working state, or the like. The camera may be a camera for a vehicle-mounted camera-monitor system (camera-monitor system, CMS).

According to the technical solutions provided in the present disclosure, the support member is set to be fastened to the top of the cockpit, and the camera is set to be connected to the support member through the height adjustment mechanism, so that when the camera needs to be used for image shooting, the camera may be switched to the first state through the height adjustment mechanism. Because the camera in the first state is lower than the internal rear-view mirror of the vehicle, the camera can perform image shooting at a good image shooting angle, and a high-quality image of a person in the vehicle can be obtained.

When the camera does not need to be used, the camera may be switched to the second state through the height adjustment mechanism. The height of the camera rises, so that impact of the vehicle-mounted camera module on a field of view of the person in the vehicle can be reduced.

In a possible implementation, the support member is configured to be fastened to a side that is of the internal rear-view mirror and that faces away from a mirror face.

According to the technical solutions provided in the present disclosure, because the height adjustment mechanism and the camera are disposed on the support member, and the support member is fastened to the side that is of the internal rear-view mirror and that faces away from the mirror face, the vehicle-mounted camera module is located on the side that is of the internal rear-view mirror and that faces away from the mirror face.

In this way, the internal rear-view mirror blocks the vehicle-mounted camera module to some extent, so that impact of disposition of the vehicle-mounted camera module on the field of view of the person in the vehicle is reduced.

In a possible implementation, the support member is configured to be fastened to a front windshield of the vehicle.

In a possible implementation, the support member is configured to be fastened to a mirror rod of the internal rear-view mirror.

In a possible implementation, the support member is a bracket.

In a possible implementation, the support member includes a housing, and the support member has a cavity configured to accommodate the height adjustment mechanism and the camera. In the first state, the camera is located outside the housing, and in the second state, the camera is located inside the housing.

In a possible implementation, in the first state, the camera faces the rear of the vehicle.

According to the technical solutions provided in the present disclosure, the camera is set to face the rear of the vehicle, so that an image of the person in the vehicle can be better obtained.

In a possible implementation, in the first state, a difference between a height of the internal rear-view mirror and the height of the camera is less than 100 mm.

According to the technical solutions provided in the present disclosure, through the foregoing setting, the image shooting angle of the camera in the first state is good, which is more conducive to obtaining a high-quality image of the person in the vehicle.

In a possible implementation, in the first state, the difference between the height of the internal rear-view mirror and the height of the camera is greater than 20 mm and less than 50 mm.

In a possible implementation, in the first state, the difference between the height of the internal rear-view mirror and the height of the camera is greater than 30 mm and less than 40 mm.

In a possible implementation, in the first state, the camera is flush with an eyellipse.

A concept of the eyellipse is proposed with development of engineering capabilities of a vehicle industry, and is developed by vehicle engineers to ensure that most vehicle drivers have a good field-of-view characteristic. Due to different body sizes of people, eye positions of different drivers are clearly different when the different drivers sit on driving seats in a normal driving posture. By applying a statistical perspective and method to study a regularity of distribution of viewpoints of the drivers, it is found that a viewpoint distribution diagram of the vehicle drivers is an ellipse, which is therefore referred to as an eyellipse, a driver eyellipse, or an eyellipse. In other words, the eyellipse is a statistical distribution diagram, of the eye positions of the drivers of different body sizes, obtained when the drivers of the different body sizes sit in a vehicle in the normal posture.

That the camera is flush with the eyellipse may mean that a center point of the camera is at a same height as a center point of the eyellipse, or may mean that a height of a center point of the camera is between a maximum height and a minimum height of the eyellipse.

According to the technical solutions provided in the present disclosure, the camera in the first state is set to be flush with the eyellipse, so that the image shooting angle of the camera in the first state is good, which is more conducive to obtaining a high-quality image of the person in the vehicle.

**In** a possible implementation, the camera in the first state protrudes toward the rear of the vehicle relative to the camera in the second state.

According to the technical solutions provided in the present disclosure, through the foregoing setting, in a process of being switched from the second state to the first state, the camera further moves toward the rear of the vehicle in addition to falling in a vertical direction. **In** this way, a horizontal distance between the camera and the internal rear-view mirror can be reduced, so that blocking of a field of view of the camera in the first state by the internal rear-view mirror is reduced, a large angular field of view of the camera is ensured, and image shooting effect is improved.

In addition, on a premise that a target angular field of view is ensured, because the internal rear-view mirror blocks the field of view of the camera in the first state little, a vertical distance between the camera and the internal rear-view mirror may be smaller, which is conducive to reducing a protrusion amount of the camera relative to the internal rear-view mirror.

In a possible implementation, in the first state, the camera is located below the internal rear-view mirror.

In a possible implementation, in the second state, the camera is blocked.

According to the technical solutions provided in the present disclosure, when image shooting is not required, the camera is set to be blocked, so that the camera cannot obtain a complete image of the person in the vehicle through image shooting, and privacy of the person in the vehicle is fully protected.

In a possible implementation, in the second state, the camera does not face the rear of the vehicle.

According to the technical solutions provided in the present disclosure, through the foregoing setting, when image shooting is not required, the person in the vehicle does not appear in the field of view of image shooting by the camera, so that privacy of the person in the vehicle is fully protected.

In a possible implementation, in the second state, the camera is in a hidden state.

That the camera is in a hidden state means that the camera cannot be observed by the person in the vehicle.

According to the technical solutions provided in the present disclosure, when image shooting is not required, the camera is hidden, so that the person in the vehicle cannot perceive the camera, which is conducive to improving riding experience of the person in the vehicle.

In a possible implementation, in the second state, the camera is located on the side that is of the internal rear-view mirror and that faces away from the mirror face.

In a possible implementation, in the second state, the camera is higher than the internal rear-view mirror.

In a possible implementation, in the second state, the camera is flush with the internal rear-view mirror.

In a possible implementation, the height adjustment mechanism includes a camera mounting member and a driving mechanism. The camera mounting member is slidably connected to the support member. The driving mechanism is separately connected to the support member and the camera mounting member, and the driving mechanism is configured to drive the camera mounting member to slide. The camera is fastened to the camera mounting member.

According to the technical solutions provided in the present disclosure, through the foregoing setting, the camera can implement switching between the first state and the second state in a sliding motion form.

In a possible implementation, a sliding direction of the camera mounting member is inclined relative to the vertical direction, and the camera gradually approaches the rear of the vehicle in a process in which the camera slides from the second state to the first state.

According to the technical solutions provided in the present disclosure, through the foregoing setting, the camera in the first state can be closer to the internal rear-view mirror, so that blocking of the field of view of the camera by the internal rear-view mirror is reduced.

In a possible implementation, an included angle between the sliding direction of the camera mounting member and the vertical direction is greater than 15° and less than 45°.

In a possible implementation, a sliding direction of the camera mounting member is the vertical direction.

In a possible implementation, the driving mechanism includes a motor and a lifting mechanism. The motor is fastened to the support member, and is connected to the camera mounting member through the lifting mechanism.

In a possible implementation, the lifting mechanism includes a lead screw and a nut. The lead screw is in a transmission connection to the motor, and the lead screw is parallel to the sliding direction of the camera mounting member. The nut is fastened to the camera mounting member and cooperates with the lead screw.

In a possible implementation, the driving mechanism includes an elastic member, and two ends of the elastic member respectively press against the support member and the camera mounting member. The support member has a first latch, and the camera mounting member has a second latch. The driving mechanism is configured, so that when the camera mounting member is pressed in the first state, the camera mounting member pushes the elastic member to compress until the first latch and the second latch are locked, and the camera is switched to the second state; or when the camera mounting member is pressed in the second state, the first latch and the second latch are unlocked, and the elastic member drives the camera to slide to the first state.

In a possible implementation, the height adjustment mechanism includes a camera mounting member and a driving mechanism. The camera mounting member is connected to the support member through the driving mechanism, and the driving mechanism is configured to drive the camera mounting member to rotate. The camera is fastened to the camera mounting member.

According to the technical solutions provided in the present disclosure, through the foregoing setting, the camera can implement switching between the first state and the second state in a rotation motion form.

In a possible implementation, the driving mechanism includes a motor. The motor is fastened to the support member, and a rotating shaft of the motor is fastened to the camera mounting member.

In a possible implementation, the driving mechanism includes a rotating shaft and a torsion spring. The camera mounting member is rotatably connected to the support member through the rotating shaft, the torsion spring is sleeved on the rotating shaft, and two torsion arms respectively press against the support member and the camera mounting member. The support member has a first latch, and the camera mounting member has a second latch. The driving mechanism is configured, so that when the camera mounting member is pressed in the first state, the camera mounting member drives the torsion spring to store energy until the first latch and the second latch are locked, and the camera is switched to the second state; or when the camera mounting member is pressed in the second state, the first latch and the second latch are unlocked, and the torsion spring drives the camera to rotate to the first state.

In a possible implementation, the height adjustment mechanism includes a camera mounting member, a first driving mechanism, a second driving mechanism, and a connecting rod. The camera is fastened to the camera mounting member. The first driving mechanism is disposed on the support member, and is connected to the second driving mechanism through the connecting rod, and the first driving mechanism is configured to drive the connecting rod to rotate. The second driving mechanism is in a transmission connection to the camera mounting member, and the second driving mechanism is configured to drive the camera mounting member to rotate. **In** the first state, the connecting rod rotates downward to a first lower target position, and the camera mounting member rotates downward to a second lower target position. In the second state, the connecting rod rotates upward to a first upper target position, and the camera mounting member rotates upward to a second upper target position.

According to the technical solutions provided in the present disclosure, two-stage rotation motion is set, so that a stroke of the camera is implemented through both rotation of the connecting rod and rotation of the camera mounting member. However, for a solution in which only one-stage rotation motion is set, the stroke of the camera is implemented only through rotation of the camera mounting member.

It may be understood that, on a premise that a same stroke of the camera is implemented, a length of the camera mounting member in the two-stage rotation motion may be less than a length of the camera mounting member in the one-stage rotation motion, and sizes of the connecting rod and the camera mounting member can partially overlap in a length direction. Therefore, through setting of the two-stage rotation motion, an overall size of the vehicle-mounted camera module can be reduced, which facilitates hiding of the vehicle-mounted camera module, and reduces impact of the vehicle-mounted camera module on the field of view of the person in the vehicle.

In addition, rotation angles of the connecting rod and the camera mounting member are adjusted, so that in the first state, the camera mounting member and the camera can be closer to the rear of the vehicle, and blocking of the camera by the internal rear-view mirror is reduced, which facilitates implementation of a large angular field of view of the camera.

In a possible implementation, the first driving mechanism includes a first motor, and the second driving mechanism includes a second motor. The first motor is fastened to the support member, and a first rotating shaft of the first motor is fastened to the connecting rod. The second motor is disposed on the connecting rod, and a second rotating shaft of the second motor is fastened to the camera mounting member.

In a possible implementation, the first driving mechanism includes a first rotating shaft and a first torsion spring, and the second driving mechanism includes a second rotating shaft and a second torsion spring. The connecting rod is rotatably connected to the support member through the first rotating shaft. The first torsion spring is sleeved on the first rotating shaft, and two torsion arms respectively press against the support member and the connecting rod. The camera mounting member is rotatably connected to the connecting rod through the second rotating shaft. The second torsion spring is sleeved on the second rotating shaft, and two torsion arms respectively press against the connecting rod and the camera mounting member. The support member has a first latch, and the camera mounting member has a second latch. The first latch and the second latch are unlocked in the first state, and the first latch and the second latch are locked in the second state.

In a possible implementation, the height adjustment mechanism is configured to drive the camera to be switched from the first state to the second state and be switched from the second state to the first state.

In a possible implementation, the height adjustment mechanism includes an elastic driving member. The support member has a first latch, and the camera mounting member has a second latch. When the camera mounting member is pressed in the first state, the camera mounting member drives the elastic driving member to store energy until the first latch and the second latch are locked, and the camera is switched to the second state. When the camera mounting member is pressed in the second state, the first latch and the second latch are unlocked, and the elastic driving member drives the camera mounting member to drive the camera to be switched to the first state.

According to a second aspect, the present disclosure provides a camera mounting bracket. The camera mounting bracket includes a support member and a height adjustment mechanism. The support member is configured to be fastened to a top of a cockpit of a vehicle. The height adjustment mechanism has a camera mounting member. The camera mounting member is configured to mount a camera. The height adjustment mechanism is configured to implement switching of the camera mounting member between a first state and a second state. A height of the camera mounting member in the first state is lower than a height of the camera mounting member in the second state, and in the first state, the camera mounting member is lower than an internal rear-view mirror of the vehicle.

According to the technical solutions provided in the present disclosure, the camera is mounted by using the camera mounting bracket, so that when image shooting is required, the camera mounting member may be switched to the first state through the height adjustment mechanism. Because the camera mounting member in the first state is lower than the internal rear-view mirror of the vehicle, the camera can perform image shooting at a good image shooting angle, and a high-quality image of a person in the vehicle can be obtained.

When image shooting is not required, the camera mounting member may be switched to the second state through the height adjustment mechanism, so that impact of the camera mounting bracket and the camera on a field of view of the person in the vehicle can be reduced.

In a possible implementation, the support member is configured to be fastened to a side that is of the internal rear-view mirror and that faces away from a mirror face.

In a possible implementation, the support member is configured to be fastened to a front windshield of the vehicle.

In a possible implementation, the support member is configured to be fastened to a mirror rod of the internal rear-view mirror.

In a possible implementation, the support member is a bracket.

In a possible implementation, the support member includes a housing, and the support member has a cavity configured to accommodate the height adjustment mechanism. **In** the first state, the camera mounting member is located outside the housing, and in the second state, the camera mounting member is located inside the housing.

In a possible implementation, when the camera is mounted on the camera mounting member, in the first state, the camera faces the rear of the vehicle.

In a possible implementation, when the camera is mounted on the camera mounting member, in the first state, a difference between a height of the internal rear-view mirror and the height of the camera is less than 100 mm.

In a possible implementation, when the camera is mounted on the camera mounting member, in the first state, the camera is flush with an eyellipse.

In a possible implementation, the camera mounting member in the first state protrudes toward the rear of the vehicle relative to the camera mounting member in the second state.

In a possible implementation, when the camera is mounted on the camera mounting member, in the second state, the camera is blocked.

In a possible implementation, when the camera is mounted on the camera mounting member, in the second state, the camera is hidden.

In a possible implementation, the height adjustment mechanism includes the camera mounting member and a driving mechanism. The camera mounting member is slidably connected to the support member. The driving mechanism is separately connected to the support member and the camera mounting member, and the driving mechanism is configured to drive the camera mounting member to slide.

In a possible implementation, a sliding direction of the camera mounting member is inclined relative to a vertical direction, and the camera mounting member gradually approaches the rear of the vehicle in a process in which the camera mounting member slides from the second state to the first state.

In a possible implementation, an included angle between the sliding direction of the camera mounting member and the vertical direction is greater than 15° and less than 45°.

In a possible implementation, a sliding direction of the camera mounting member is a vertical direction.

In a possible implementation, the driving mechanism includes a motor and a lifting mechanism. The motor is fastened to the support member, and is connected to the camera mounting member through the lifting mechanism.

In a possible implementation, the lifting mechanism includes a lead screw and a nut. The lead screw is in a transmission connection to the motor, and the lead screw is parallel to the sliding direction of the camera mounting member. The nut is fastened to the camera mounting member and cooperates with the lead screw.

In a possible implementation, the driving mechanism includes an elastic member, and two ends of the elastic member respectively press against the support member and the camera mounting member. The support member has a first latch, and the camera mounting member has a second latch. The driving mechanism is configured, so that when the camera mounting member is pressed in the first state, the camera mounting member pushes the elastic member to compress until the first latch and the second latch are locked, and the camera mounting member is switched to the second state; or when the camera mounting member is pressed in the second state, the first latch and the second latch are unlocked, and the elastic member drives the camera mounting member to slide to the first state.

In a possible implementation, the height adjustment mechanism includes the camera mounting member and a driving mechanism. The camera mounting member is connected to the support member through the driving mechanism, and the driving mechanism is configured to drive the camera mounting member to rotate.

In a possible implementation, the driving mechanism includes a motor. The motor is fastened to the support member, and a rotating shaft of the motor is fastened to the camera mounting member.

In a possible implementation, the driving mechanism includes a rotating shaft and a torsion spring. The camera mounting member is rotatably connected to the support member through the rotating shaft, the torsion spring is sleeved on the rotating shaft, and two torsion arms respectively press against the support member and the camera mounting member. The support member has a first latch, and the camera mounting member has a second latch. The driving mechanism is configured, so that when the camera mounting member is pressed in the first state, the camera mounting member drives the torsion spring to store energy until the first latch and the second latch are locked, and the camera mounting member is switched to the second state; or when the camera mounting member is pressed in the second state, the first latch and the second latch are unlocked, and the torsion spring drives the camera mounting member to rotate to the first state.

In a possible implementation, the height adjustment mechanism includes the camera mounting member, a first driving mechanism, a second driving mechanism, and a connecting rod. The first driving mechanism is disposed on the support member, and is connected to the second driving mechanism through the connecting rod, and the first driving mechanism is configured to drive the connecting rod to rotate. The second driving mechanism is in a transmission connection to the camera mounting member, and the second driving mechanism is configured to drive the camera mounting member to rotate. In the first state, the connecting rod rotates upward to a first upper target position, and the camera mounting member rotates upward to a second upper target position. In the second state, the connecting rod rotates downward to a first lower target position, and the camera mounting member rotates downward to a second lower target position.

In a possible implementation, the first driving mechanism includes a first motor, and the second driving mechanism includes a second motor. The first motor is fastened to the support member, and a first rotating shaft of the first motor is fastened to the connecting rod. The second motor is disposed on the connecting rod, and a second rotating shaft of the second motor is fastened to the camera mounting member.

In a possible implementation, the first driving mechanism includes a first rotating shaft and a first torsion spring, and the second driving mechanism includes a second rotating shaft and a second torsion spring. The connecting rod is rotatably connected to the support member through the first rotating shaft. The first torsion spring is sleeved on the first rotating shaft, and two torsion arms respectively press against the support member and the connecting rod. The camera mounting member is rotatably connected to the connecting rod through the second rotating shaft. The second torsion spring is sleeved on the second rotating shaft, and two torsion arms respectively press against the connecting rod and the camera mounting member. The support member has a first latch, and the camera mounting member has a second latch. The first latch and the second latch are unlocked in the first state, and the first latch and the second latch are locked in the second state.

According to a third aspect, the present disclosure provides a vehicle. The vehicle has the vehicle-mounted camera module according to any implementation of the first aspect, or the camera mounting bracket according to any implementation of the second aspect.

### BRIEF DESCRIPTION OF DRAWINGS

FIG. 1 is a diagram of an interior of a cockpit of a vehicle according to an embodiment of the present disclosure;
FIG. 2 is a diagram of a vehicle-mounted camera module according to an embodiment of the present disclosure;
FIG. 3 is a diagram of a vehicle-mounted camera module according to an embodiment of the present disclosure;
FIG. 4 is a diagram of a vehicle-mounted camera module according to an embodiment of the present disclosure;
FIG. 5 is a diagram of a vehicle-mounted camera module according to an embodiment of the present disclosure;
FIG. 6 is a diagram of a vehicle-mounted camera module according to an embodiment of the present disclosure;
FIG. 7 is a diagram of a vehicle-mounted camera module according to an embodiment of the present disclosure;
FIG. 8 is a diagram of a vehicle-mounted camera module according to an embodiment of the present disclosure;
FIG. 9 is a diagram of a vehicle-mounted camera module according to an embodiment of the present disclosure;
FIG. 10 is a diagram of a vehicle-mounted camera module according to an embodiment of the present disclosure;
FIG. 11 is a diagram of a vehicle-mounted camera module according to an embodiment of the present disclosure; and
FIG. 12 is a diagram of a vehicle-mounted camera module according to an embodiment of the present disclosure.

### Description of reference numerals:

1: vehicle-mounted camera module; 2: front windshield; 3: internal rear-view mirror; 31: mirror rod;
11: support member; 111: guide rail; 112: first latch;
12: height adjustment mechanism;
121: camera mounting member; 1211: sliding block; 1212: second latch;
122: driving mechanism; 122a: first driving mechanism; 122b: second driving mechanism; 1221: motor; 1221a: first motor; 1221b: second motor; 12211: rotating shaft; 12211a: first rotating shaft; 12211b: second rotating shaft; 1222: lifting mechanism; 12221: lead screw; 12222: nut; 1223: elastic member; 1224: torsion spring, 1224a: first torsion spring; 1224b: second torsion spring;
123: connecting rod;
13: camera.

### DESCRIPTION OF EMBODIMENTS

Currently, vehicle-mounted cameras configured to perform image shooting inside vehicles are disposed in some vehicles. This type of vehicle-mounted camera faces a cockpit. When a person in the vehicle wants to make a video call or take a photo, the vehicle-mounted camera may be started.

However, this type of vehicle-mounted camera is usually disposed at a position of a top light in the vehicle, and an image shooting angle is poor. Only the head of the person in the vehicle can be captured, and quality of a shot image is poor.

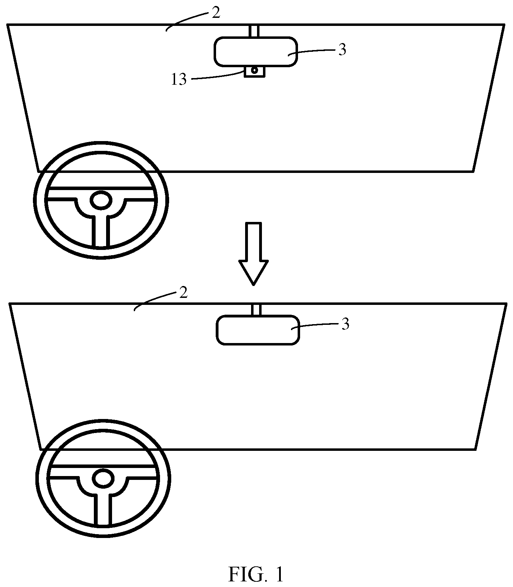

In view of the foregoing technical problem, embodiments of the present disclosure provide a vehicle-mounted camera module, where a height of a camera 13 of the vehicle-mounted camera module can be adjusted. As shown in an upper part of FIG. 1, in a first state, the camera 13 is lower than an internal rear-view mirror 3 of a vehicle, so that the camera 13 can shoot an image of a person in the vehicle at a good image shooting angle. As shown in a lower part of FIG. 1, in a second state, the height of the camera 13 rises, so that impact of the camera 13 on a field of view of a person in the vehicle is reduced.

The following describes an example of the vehicle-mounted camera module provided in embodiments of the present disclosure.

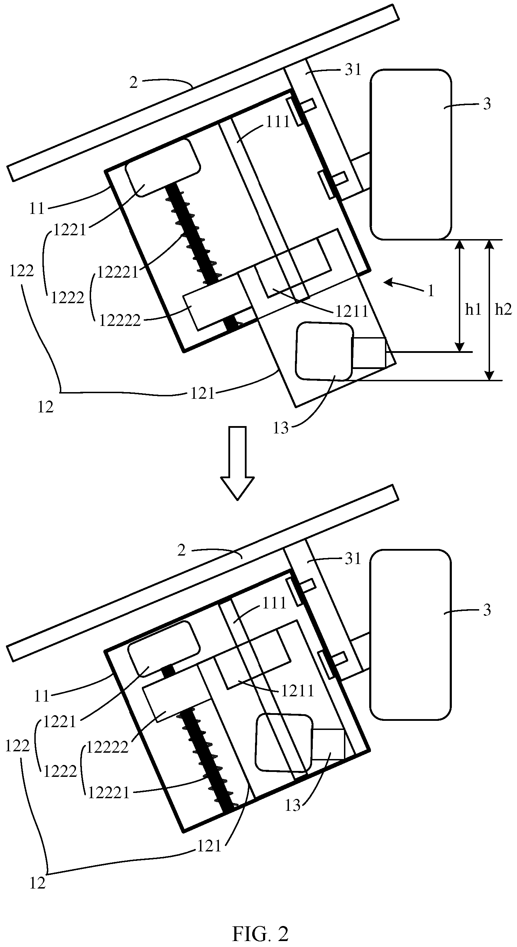

As shown in FIG. 2 to FIG. 12, the vehicle-mounted camera module 1 includes a support member 11, a height adjustment mechanism 12, and the camera 13. The support member 11 is configured to be fastened to a top of a cockpit of the vehicle. The camera 13 is connected to the support member 11 through the height adjustment mechanism 12. The height adjustment mechanism 12 is configured to implement switching of the camera 13 between the first state and the second state. In addition, a height of the camera 13 in the first state is lower than a height of the camera 13 in the second state, and in the first state, the camera 13 is lower than the internal rear-view mirror 3 of the vehicle.

The support member 11 is configured to support the height adjustment mechanism 12 and the camera 13. The cockpit may also be referred to as a passenger cockpit.

The height adjustment mechanism 12 is configured to implement state switching of the camera 13. For example, the height adjustment mechanism 12 may implement state switching by driving the camera 13 to slide, or may implement state switching by driving the camera 13 to rotate. This is not limited in embodiments of the present disclosure.

The camera 13 in the first state may be configured to shoot an image, and the first state may also be referred to as an image shooting state or a working state. The camera 13 in the second state may not be configured to shoot an image, and the second state may also be referred to as a stowed state or a non-working state. The camera 13 may be a camera for a vehicle-mounted camera-monitor system (camera-monitor system, CMS).

According to the technical solutions provided in embodiments of the present disclosure, the support member 11 is set to be fastened to the top of the cockpit, and the camera 13 is set to be connected to the support member 11 through the height adjustment mechanism 12, so that when the camera 13 needs to be used for image shooting, the camera 13 may be switched to the first state (as shown in the upper part of FIG. 1) through the height adjustment mechanism 12. Because the camera 13 in the first state is lower than the internal rear-view mirror 3 of the vehicle, an image shooting angle of the camera 13 is good, and a high-quality image of the person in the vehicle can be obtained.

When the camera 13 does not need to be used, the camera 13 may be switched to the second state (as shown in the lower part of FIG. 1) through the height adjustment mechanism 12. The height of the camera 13 rises, so that impact of the vehicle-mounted camera module 1 on the field of view of the person in the vehicle can be reduced.

The following describes an example of the support member 11.

A mounting position of the support member 11 is not limited in embodiments of the present disclosure. In some examples, as shown in FIG. 2 to FIG. 12, the support member 11 is configured to be fastened to a side that is of the internal rear-view mirror 3 and that faces away from a mirror face.

Because the height adjustment mechanism 12 and the camera 13 are disposed on the support member 11, the entire vehicle-mounted camera module 1 may be located on the side that is of the internal rear-view mirror 3 and that faces away from the mirror face. In this way, the internal rear-view mirror 3 blocks the vehicle-mounted camera module 1, so that impact of disposition of the vehicle-mounted camera module 1 on the field of view of the person in the vehicle is reduced.

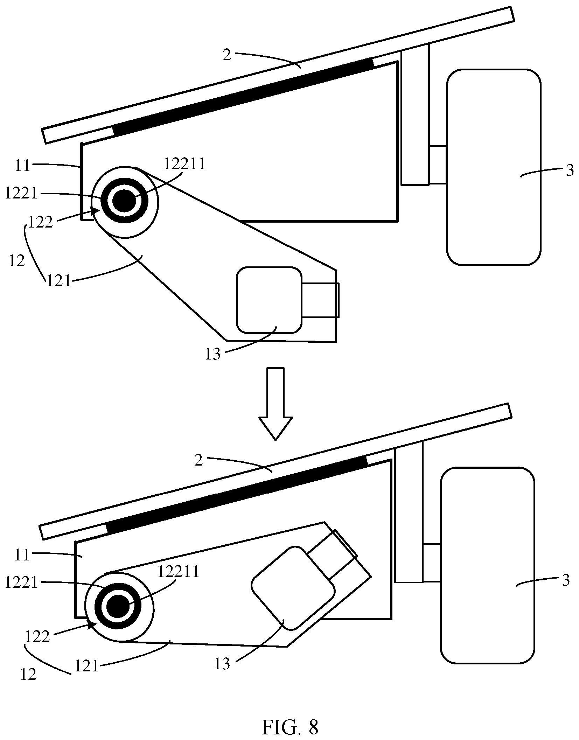

In embodiments of the present disclosure, a component that is on the top of the cockpit and that is configured to mount the support member 11 is not limited. In some examples, as shown in FIG. 2 to FIG. 7, the support member 11 is configured to be fastened to a mirror rod 31 of the internal rear-view mirror 3. In some other examples, as shown in FIG. 8 to FIG. 12, the support member 11 is configured to be fastened to a front windshield 2 of the vehicle.

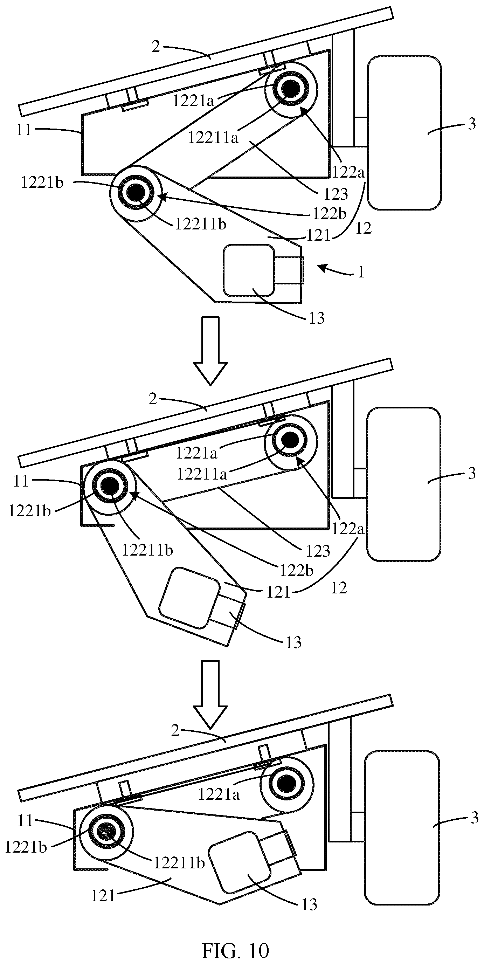

A mounting manner of the support member 11 is not limited in embodiments of the present disclosure. In some examples, the support member 11 is fastened by using a screw. For example, as shown in FIG. 2 to FIG. 7, the support member 11 is fastened to the mirror rod 31 of the internal rear-view mirror 3 by using a screw. For another example, as shown in FIG. 10 to FIG. 12, the support member 11 is fastened to the front windshield 2 by using a screw.

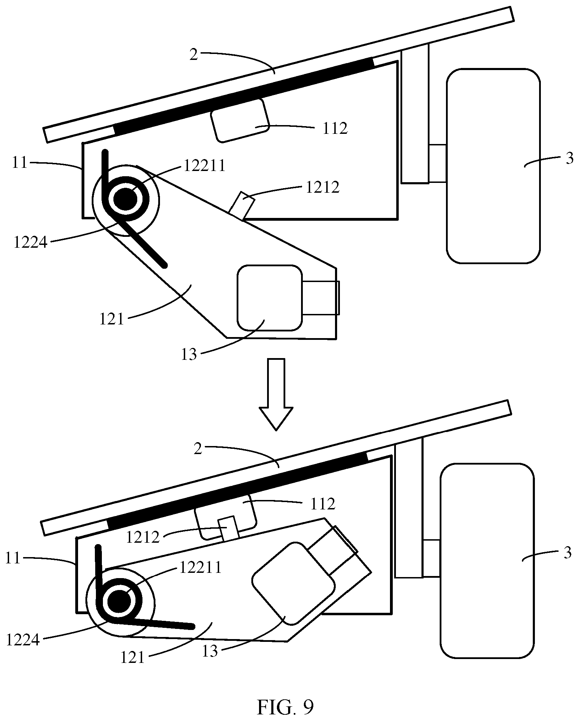

In some other examples, the support member 11 is fastened in a bonding manner. For example, as shown in FIG. 8 and FIG. 9, the support member 11 is bonded to the front windshield 2. For another example, the support member 11 may alternatively be bonded to the mirror rod 31 of the internal rear-view mirror 3.

A form of the support member 11 is not limited in embodiments of the present disclosure. In some examples, as shown in FIG. 2 to FIG. 12, the support member 11 includes a housing, and has a cavity configured to accommodate the height adjustment mechanism 12 and the camera 13. In this case, the support member 11 supports the height adjustment mechanism 12 and the camera 13, and also protects and blocks the height adjustment mechanism 12 and the camera 13.

For example, in the first state, the camera 13 is located outside the housing. In the second state, the camera 13 is located inside the housing.

Certainly, in some other examples, the support member 11 may alternatively be a bracket. In this case, if the height adjustment mechanism 12 and the camera 13 need to be blocked, blocking may be implemented by using an inner decoration part on the top of the cockpit of the vehicle.

The following describes postures, positions, and the like of the camera 13 in the first state and the second state by using examples.

In some examples, as shown in FIG. 1 to FIG. 12, in the first state, the camera 13 faces the rear of the vehicle, so that the camera 13 can better obtain an image of the person in the vehicle.

In some other examples, an orientation of the camera 13 in the first state may be adjusted according to a requirement of the person in the vehicle. For example, the person in the vehicle may change the orientation of the camera 13, to meet different image shooting requirements of the person in the vehicle. For example, in the first state, the camera 13 may alternatively face the front of the vehicle, to meet an image shooting requirement of the person in the vehicle for the front of the vehicle.

In embodiments of the present disclosure, the height of the camera 13 in the first state is not limited. In some examples, to improve image shooting effect, in the first state, the camera 13 is flush with an eyellipse.

A concept of the eyellipse is proposed with development of engineering capabilities of a vehicle industry, and is developed by vehicle engineers to ensure that most vehicle drivers have a good field-of-view characteristic. Due to different body sizes of people, eye positions of different drivers are clearly different when the different drivers sit on driving seats in a normal driving posture. By applying a statistical perspective and method to study a regularity of distribution of viewpoints of the drivers, it is found that a viewpoint distribution diagram of the vehicle drivers is an ellipse, which is therefore referred to as an eyellipse, a driver eyellipse, or an eyellipse. In other words, the eyellipse is a statistical distribution diagram, of the eye positions of the drivers of different body sizes, obtained when the drivers of the different body sizes sit in a vehicle in the normal posture.

That the camera 13 is flush with the eyellipse may mean that a center point of the camera 13 is at a same height as a center point of the eyellipse, or may mean that a height of a center point of the camera 13 is between a maximum height and a minimum height of the eyellipse. This is not specifically limited in embodiments of the present disclosure.

To implement that the camera 13 is flush with the eyellipse in the first state, in some examples, in the first state, a difference between a height of the internal rear-view mirror 3 and the height of the camera 13 is less than 100 mm. That is, a size of protrusion, of the camera 13, from the internal rear-view mirror 3 is less than 100 mm.

For example, in the first state, the difference between the height of the internal rear-view mirror 3 and the height of the camera 13 is greater than 20 mm and less than 50 mm.

For another example, in the first state, the difference between the height of the internal rear-view mirror 3 and the height of the camera 13 is greater than 30 mm and less than 40 mm, for example, may be 35 mm.

It should be noted that, as shown in FIG. 2, the difference between the height of the internal rear-view mirror 3 and the height of the camera 13 may be defined as a distance between the center point of the camera 13 and a lowest point of the internal rear-view mirror 3, namely, h1, or may be defined as a distance between a lowest point of the camera 13 and a lowest point of the internal rear-view mirror 3, namely, h2. This is not specifically limited in embodiments of the present disclosure.

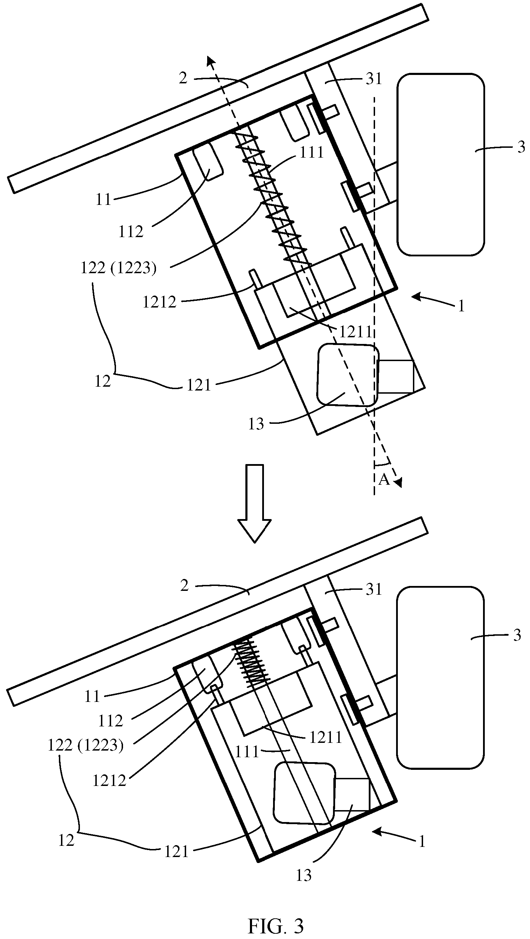

In addition, for a case in which the support member 11 is located on the side that is of the internal rear-view mirror 3 and that faces away from the mirror face, in some examples, as shown in FIG. 2 and FIG. 3, the camera 13 in the first state protrudes toward the rear of the vehicle relative to the camera 13 in the second state.

In other words, in a process of being switched from the second state to the first state, the camera 13 further approaches the rear of the vehicle (the internal rear-view mirror 3) in a horizontal direction in addition to falling in a vertical direction.

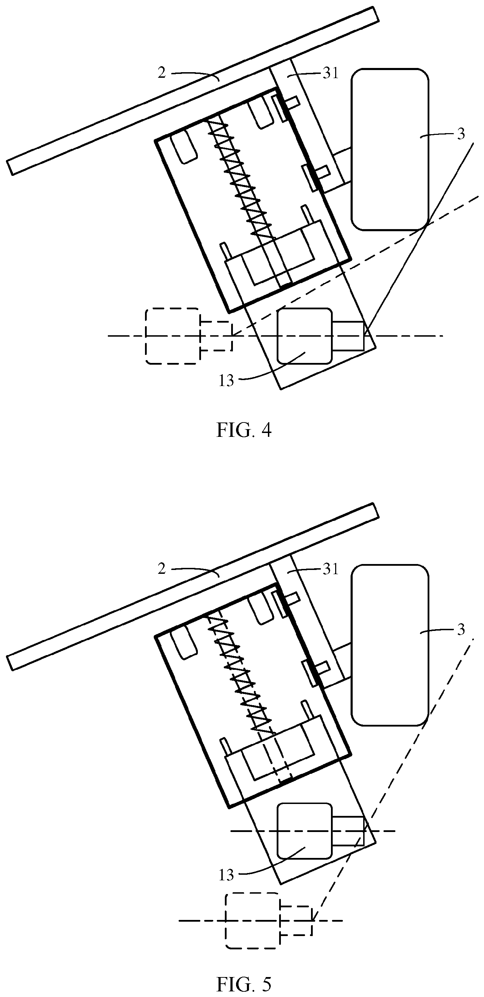

In this way, in the first state, a spacing between the camera 13 and the internal rear-view mirror 3 can be reduced, and blocking of a field of view of the camera 13 by the internal rear-view mirror 3 is reduced. As shown in FIG. 4, two cameras 13 at a same height but different horizontal positions are shown. It can be seen from the figure that a field of view of a camera 13 close to the rear of the vehicle is less blocked by the internal rear-view mirror 3. Therefore, through the foregoing setting, a large angular field of view can be implemented.

In addition, as shown in FIG. 5, positions of two cameras 13 with a same angular field of view are shown. It can be seen from the figure that the two cameras 13 have the same angular field of view, but a height of a camera 13 close to the rear of the vehicle is higher than a height of a camera 13 away from the rear of the vehicle. Therefore, a protrusion amount of the camera 13 relative to the internal rear-view mirror 3 is reduced, and blocking of the field of view of the person in the vehicle by the camera 13 is reduced.

In conclusion, the camera 13 in the first state is set to protrude toward the rear of the vehicle relative to the camera 13 in the second state, so that a larger angular field of view can be implemented on a premise that a specific height of the camera 13 is maintained, and the protrusion amount of the camera 13 relative to the internal rear-view mirror 3 can be reduced (that is, the camera 13 is raised) on a premise that a specific angular field of view of the camera 13 is maintained.

To implement a large angular field of view of the camera 13, in some examples, as shown in FIG. 2 and FIG. 3, in the first state, the camera 13 is located below the internal rear-view mirror 3.

"Below" may be "right below", or may be "obliquely below" (as shown in FIG. 2 and FIG. 3). That the camera 13 is located below the internal rear-view mirror 3 may be defined as that projections of the camera 13 and the internal rear-view mirror 3 in the vertical direction partially overlap.

Certainly, a specific position of the camera 13 needs to be determined based on a specific scenario and according to an actual requirement of the person in the vehicle for the angular field of view. **In** some other examples, in the first state, the camera 13 may alternatively be located on the side that is of the internal rear-view mirror 3 and that faces away from the mirror face.

For the second state, because the camera 13 is not configured to shoot an image, to protect privacy of the person in the vehicle, in some examples, in the second state, the camera 13 is blocked.

That the camera 13 is blocked means that the camera 13 cannot obtain a complete image of the person in the vehicle through image shooting, for example, may mean that the camera 13 completely cannot shoot an image of the person in the vehicle, or may mean that the camera 13 cannot shoot an image of a face of the person in the vehicle.

An implementation in which the camera 13 is blocked is not limited in embodiments of the present disclosure, and blocking of the camera 13 may be implemented by any component. **In** some examples, as shown in FIG. 2 to FIG. 12, in the second state, the camera 13 is blocked by the support member 11. In some other examples, the camera 13 may alternatively be blocked by the internal rear-view mirror 3, blocked by the cockpit, or the like.

Certainly, in some other examples, alternatively, an orientation of the camera 13 in the second state may be limited, so that the camera 13 cannot obtain the complete image of the person in the vehicle through image shooting. For example, in the second state, the camera 13 does not face the rear of the vehicle, for example, may face right above or right below.

In addition, in the second state, the camera 13 may be in a hidden state. Therefore, it is difficult for the person in the vehicle to perceive the camera 13, which is conducive to improving riding experience of the person in the vehicle. That the camera 13 is in the hidden state means that the camera 13 cannot be observed by the person in the vehicle.

An implementation in which the camera 13 is in the hidden state is not limited in embodiments of the present disclosure. In some examples, the camera 13 is hidden on the side that is of the internal rear-view mirror 3 and that faces away from the mirror face.

For example, in the second state, the camera 13 is higher than the internal rear-view mirror 3, or the camera 13 is flush with the internal rear-view mirror 3. Therefore, the internal rear-view mirror 3 can completely block the camera 13.

For another example, in the second state, as shown in FIG. 2 to FIG. 12, the camera 13 is hidden inside the support member 11.

An implementation of the height adjustment mechanism 12 is not limited in embodiments of the present disclosure. The following provides examples for description.

Classified based on motion forms of the camera 13, the height adjustment mechanism 12 may have the following several implementations.
(1) In some examples, as shown in FIG. 2 to FIG. 7, the height adjustment mechanism 12 includes a camera mounting member 121 and a driving mechanism 122. The camera mounting member 121 is slidably connected to the support member 11. The driving mechanism 122 is separately connected to the support member 11 and the camera mounting member 121, and the driving mechanism 122 is configured to drive the camera mounting member 121 to slide. The camera 13 is fastened to the camera mounting member 121.

That is, the camera 13 implements switching between the first state and the second state in a sliding motion form.

In some examples, as shown in FIG. 2 to FIG. 7, the support member 11 has a guide rail 111, the camera mounting member 121 has a sliding block 1211, and the sliding block 1211 is slidably connected to the guide rail 111.

A sliding direction of the camera mounting member 121 (the camera 13) is not limited in embodiments of the present disclosure. In some examples, as shown in FIG. 2 to FIG. 5, the sliding direction of the camera mounting member 121 is inclined relative to the vertical direction, and the camera 13 gradually slides toward the rear of the vehicle in a process in which the camera 13 slides from the second state to the first state.

In this way, the camera 13 in the first state can protrude toward the rear of the vehicle relative to the camera 13 in the second state, so that blocking of the field of view of the camera 13 in the first state by the internal rear-view mirror 3 can be reduced, and a large angular field of view of the camera 13 can be ensured.

In some examples, as shown in FIG. 3, an included angle (namely, ∠A) between the sliding direction of the camera mounting member 121 and the vertical direction is greater than 15° and less than 45°, for example, may be 28°.

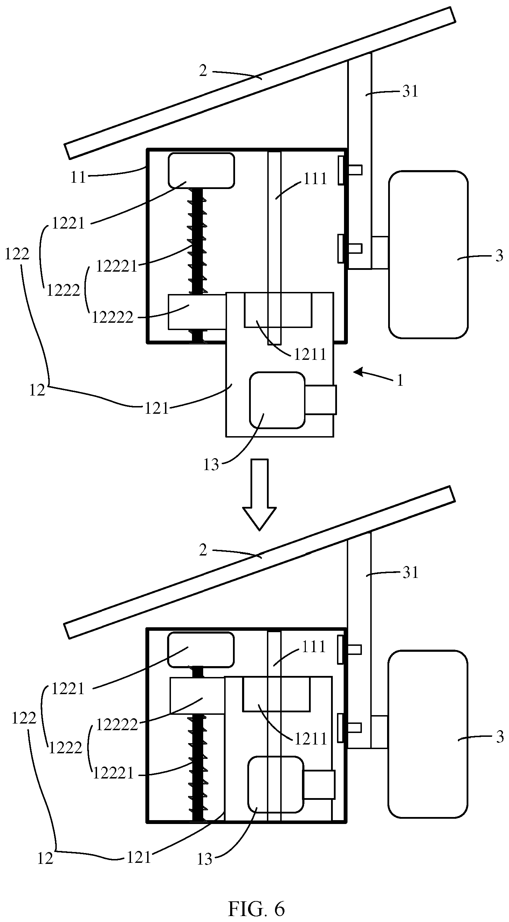

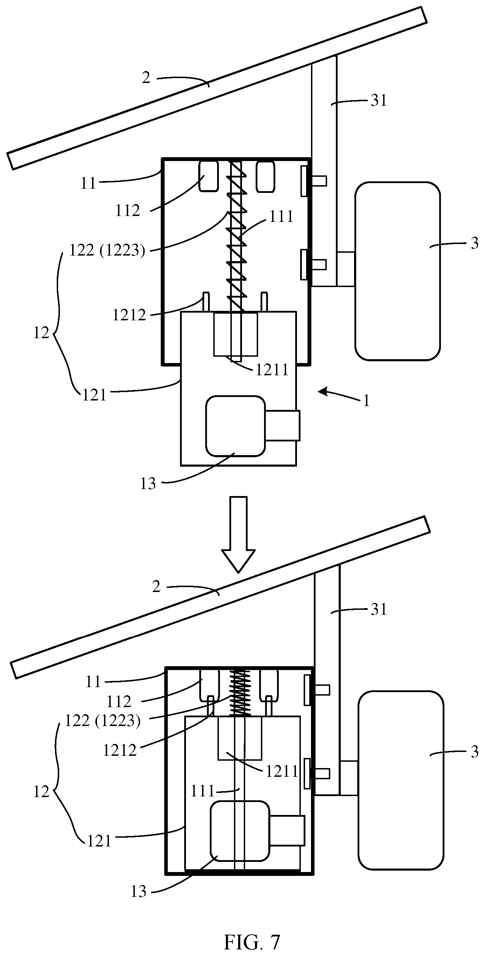

Certainly, in some other examples, as shown in FIG. 6 and FIG. 7, the sliding direction of the camera mounting member 121 may alternatively be the vertical direction, and the camera 13 can rise or fall in the vertical direction. This is not specifically limited in embodiments of the present disclosure.

An implementation of the driving mechanism 122 is not limited in embodiments of the present disclosure. In some examples, the driving mechanism 122 is an electric driving mechanism, and is configured to drive the camera mounting member 121 to rise or fall.

For example, as shown in FIG. 2 and FIG. 6, the driving mechanism 122 includes a motor 1221 and a lifting mechanism 1222. The motor 1221 is fastened to the support member 11, and is connected to the camera mounting member 121 through the lifting mechanism 1222. The motor 1221 can drive the camera mounting member 121 to rise or fall through the lifting mechanism 1222.

A type of the lifting mechanism 1222 is not limited in embodiments of the present disclosure. In some examples, as shown in FIG. 2 and FIG. 6, the lifting mechanism 1222 is a lead screw nut mechanism, including a lead screw 12221 and a nut 12222. The lead screw 12221 is in a transmission connection to the motor 1221, and is parallel to the sliding direction of the camera mounting member 121. The nut 12222 is fastened to the camera mounting member 121 and cooperates with the lead screw 12221.

When the motor 1221 rotates, the lead screw 12221 rotates, and drives the nut 12222 and the camera mounting member 121 to slide along the lead screw 12221. A rotation direction of the motor 1221 is changed, so that sliding directions of the nut 12222 and the camera mounting member 121 can be changed, and the camera mounting member 121 can rise or fall.

The lead screw nut mechanism may be a common lead screw nut mechanism, or may be a ball screw mechanism with higher precision. This is not limited in embodiments of the present disclosure.

In some other examples, the lifting mechanism 1222 is a gear rack mechanism, and includes a rack and a gear. The rack is fastened to the camera mounting member 121, and is parallel to the sliding direction of the camera mounting member 121. The motor 1221 is in a transmission connection to the gear, and the gear is engaged with the rack.

When the motor 1221 rotates, the gear rotates, and drives the rack and the camera mounting member 121 to slide. A rotation direction of the motor 1221 is changed, so that sliding directions of the rack and the camera mounting member 121 can be changed, and the camera mounting member 121 can rise or fall.

With reference to FIG. 2 and FIG. 6, the following describes an example of a process in which the camera 13 is switched between the first state and the second state.

When the camera 13 does not need to be used, if the camera 13 is currently in the first state (as shown in upper parts of FIG. 2 and FIG. 6), the motor 1221 rotates in a first direction, and the motor 1221 drives, through the lifting mechanism 1222, the camera mounting member 121 to slide upward until the camera 13 is switched to the second state (as shown in lower parts of FIG. 2 and FIG. 6).

When the camera 13 needs to be used, the motor 1221 rotates in a second direction, and the motor 1221 drives, through the lifting mechanism 1222, the camera mounting member 121 to slide downward until the camera 13 is switched to the first state.

In addition to the electric driving mechanism, in some other examples, the driving mechanism 122 may alternatively be an elastic driving mechanism. The elastic driving mechanism is only configured to drive the camera mounting member 121 to slide downward, and a force for the camera mounting member 121 to slide upward needs to be provided by the person in the vehicle.

For example, as shown in FIG. 3 and FIG. 7, the driving mechanism 122 includes an elastic member 1223, and two ends of the elastic member 1223 respectively press against the support member 11 and the camera mounting member 121. The support member 11 has a first latch 112, and the camera mounting member 121 has a second latch 1212.

Positions of the first latch 112 and the second latch 1212 are opposite to each other, and the first latch 112 and the second latch 1212 are configured to cooperate with each other for locking, so that the camera mounting member 121 (the camera 13) can be stabilized in the second state. **In** addition, the first latch 112 and the second latch 1212 can alternatively be unlocked, so that the elastic member 1223 can drive the camera mounting member 121 and the camera 13 to be switched to the first state.

In some examples, the first latch 112 and the second latch 1212 are configured as follows: When the camera mounting member 121 is pressed in a locked state, the first latch 112 and the second latch 1212 are unlocked; or when the camera mounting member 121 is pressed in an unlocked state, the first latch 112 and the second latch 1212 are locked.

For example, to implement the foregoing functions, the first latch 112 and the second latch 1212 may be a rebounder and a push-push buckle, a resetter and a locking device, a heart-shaped groove structure (which may also be referred to as maze mechanisms) and a hook, or the like.

With reference to FIG. 3 and FIG. 7, the following describes an example of a process in which the camera 13 is switched between the first state and the second state.

When the camera 13 does not need to be used, if the camera 13 is currently in the first state (as shown in upper parts of FIG. 3 and FIG. 7), the person in the vehicle presses the camera mounting member 121, so that the camera mounting member 121 slides upward. The camera mounting member 121 pushes the elastic member 1223 to compress until the first latch 112 and the second latch 1212 are locked, and the camera 13 is switched to the second state (as shown in lower parts of FIG. 3 and FIG. 7).

When the camera 13 needs to be used, the person in the vehicle presses the camera mounting member 121 again, the first latch 112 and the second latch 1212 are unlocked, and the elastic member 1223 drives the camera 13 to slide downward to the first state.

(2) In some examples, as shown in FIG. 8 and FIG. 9, the height adjustment mechanism 12 includes a camera mounting member 121 and a driving mechanism 122. The camera mounting member 121 is connected to the support member 11 through the driving mechanism 122, and the driving mechanism 122 is configured to drive the camera mounting member 121 to rotate. The camera 13 is fastened to the camera mounting member 121.

That is, the camera 13 implements switching between the first state and the second state in a rotation motion form.

In some examples, as shown in FIG. 8 and FIG. 9, a first end of the camera mounting member 121 is connected to the driving mechanism 122, and a second end of the camera mounting member 121 is connected to the camera 13. In addition, the second end of the camera mounting member 121 is closer to the internal rear-view mirror 3 relative to the first end.

An implementation of the driving mechanism 122 is not limited in embodiments of the present disclosure. In some examples, the driving mechanism 122 is an electric driving mechanism, and is configured to implement downward rotation and downward rotation of the camera mounting member 121.

For example, as shown in FIG. 8, the driving mechanism 122 includes a motor 1221, the motor 1221 is fastened to the support member 11, and a rotating shaft 12211 of the motor 1221 is fastened to the camera mounting member 121. The motor 1221 can implement bidirectional rotation of the camera 13 by changing a rotation direction of the rotating shaft 12211.

With reference to FIG. 8, the following describes an example of a process in which the camera 13 is switched between the first state and the second state.

When the camera 13 does not need to be used, if the camera 13 is currently in the first state (as shown in an upper part of FIG. 8), the motor 1221 drives the camera mounting member 121 to rotate upward until the camera 13 is switched to the second state (as shown in a lower part of FIG. 8).

When the camera 13 needs to be used, the motor 1221 drives the camera mounting member 121 to rotate downward until the camera 13 is switched to the first state.

In addition to the electric driving mechanism, in some other examples, the driving mechanism 122 may alternatively be an elastic driving mechanism. The elastic driving mechanism is only configured to drive the camera mounting member 121 to rotate downward, and a force for the camera mounting member 121 to rotate upward needs to be provided by the person in the vehicle.

For example, as shown in FIG. 9, the driving mechanism 122 includes a rotating shaft 12211 and a torsion spring 1224. The camera mounting member 121 is rotatably connected to the support member 11 through the rotating shaft 12211. The torsion spring 1224 is sleeved on the rotating shaft 12211, and the two torsion arms respectively press against the support member 11 and the camera mounting member 121. The support member 11 has a first latch 112, and the camera mounting member 121 has a second latch 1212.

With reference to FIG. 9, the following describes an example of a process in which the camera 13 is switched between the first state and the second state.

When the camera 13 does not need to be used, if the camera 13 is currently in the first state (as shown in an upper part of FIG. 9), the person in the vehicle presses the camera mounting member 121, so that the camera mounting member 121 rotates upward. The camera mounting member 121 pushes the torsion spring 1224 to store energy until the first latch 112 and the second latch 1212 are locked, and the camera 13 is switched to the second state (as shown in a lower part of FIG. 9).

When the camera 13 needs to be used, the person in the vehicle presses the camera mounting member 121 again, the first latch 112 and the second latch 1212 are unlocked, and the torsion spring 1224 drives the camera 13 to rotate to the first state.

(3) In some examples, as shown in FIG. 10 to FIG. 12, the height adjustment mechanism 12 includes a camera mounting member 121, a first driving mechanism 122a, a second driving mechanism 122b, and a connecting rod 123. The camera 13 is fastened to the camera mounting member 121. The first driving mechanism 122a is disposed on the support member 11, and is connected to the second driving mechanism 122b through the connecting rod 123. The first driving mechanism 122a is configured to drive the connecting rod 123 to rotate. The second driving mechanism 122b is in a transmission connection to the camera mounting member 121, and the second driving mechanism 122b is configured to drive the camera mounting member 121 to rotate. A rotation axis of the camera mounting member 121 may be farther away from the internal rear-view mirror 3 relative to a rotation axis of the connecting rod 123.

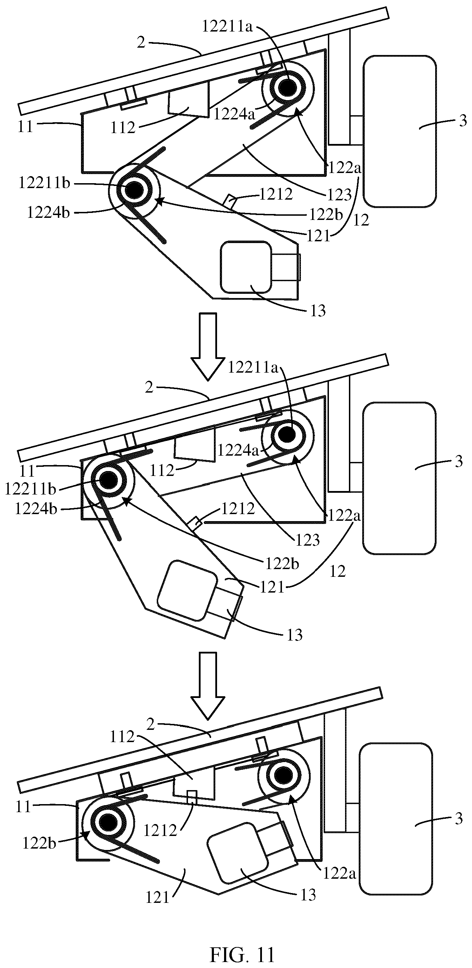

In the first state, as shown in upper parts of FIG. 10 and FIG. 11, the connecting rod 123 rotates downward to a first lower target position, and the camera mounting member 121 rotates downward to a second lower target position.

In the second state, as shown in lower parts of FIG. 10 and FIG. 11, the connecting rod 123 rotates upward to a first upper target position, and the camera mounting member 121 rotates upward to a second upper target position.

According to the technical solutions provided in embodiments of the present disclosure, two-stage rotation motion is set, so that a stroke of the camera 13 is implemented through both rotation of the connecting rod 123 and rotation of the camera mounting member 121. However, for a solution in which only one-stage rotation motion is set, the stroke of the camera 13 is implemented only through rotation of the camera mounting member 121.

It may be understood that, on a premise that a same stroke of the camera 13 is implemented, a length of the camera mounting member 121 in the two-stage rotation motion may be less than a length of the camera mounting member 121 in the one-stage rotation motion, and sizes of the connecting rod 123 and the camera mounting member 121 can partially overlap in a length direction. Therefore, through setting of the two-stage rotation motion, an overall size of the vehicle-mounted camera module 1 can be reduced, which facilitates hiding of the vehicle-mounted camera module 1, and reduces impact of the vehicle-mounted camera module 1 on the field of view of the person in the vehicle.

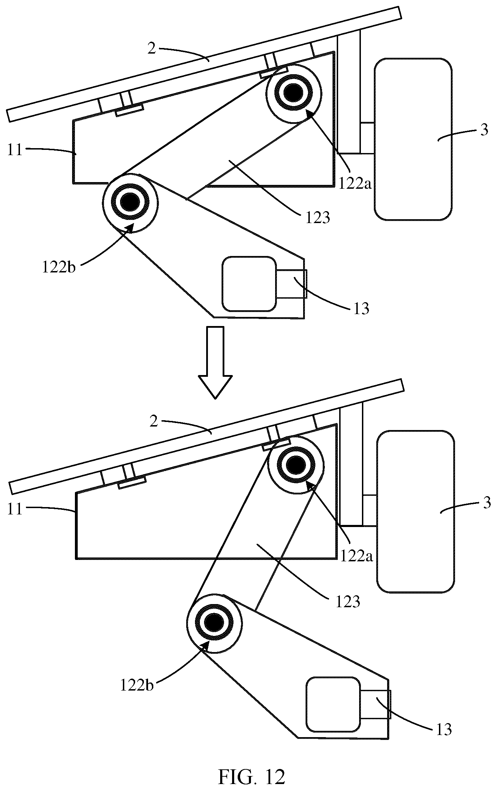

In addition, as shown in FIG. 12, rotation angles of the connecting rod 123 and the camera mounting member 121 are adjusted, so that in the first state, the camera mounting member 121 and the camera 13 can be closer to the rear of the vehicle, and blocking of the camera 13 by the internal rear-view mirror 3 can be reduced, which facilitates implementation of a large angular field of view of the camera 13.

Implementations of the first driving mechanism 122a and the second driving mechanism 122b are not limited in embodiments of the present disclosure. In some examples, both the first driving mechanism 122a and the second driving mechanism 122b are electric driving mechanisms, and are configured to implement switching of the camera mounting member 121 from the first state to the second state and from the second state to the first state.

For example, as shown in FIG. 10, the first driving mechanism 122a includes a first motor 1221a, and the second driving mechanism 122b includes a second motor 1221b. The first motor 1221a is fastened to the support member 11, and a first rotating shaft 12211a of the first motor 1221a is fastened to the connecting rod 123. The second motor 1221b is disposed on the connecting rod 123, and a second rotating shaft 12211b of the second motor 1221b is fastened to the camera mounting member 121.

With reference to FIG. 10, the following describes an example of a process in which the camera 13 is switched between the first state and the second state.

When the camera 13 does not need to be used, if the camera 13 is currently in the first state (as shown in the upper part of FIG. 10), the first motor 1221a drives the connecting rod 123 to rotate upward to the first upper target position (as shown in a middle part of FIG. 10). Then, the second motor 1221b drives the camera mounting member 121 to rotate upward to the second upper target position, and the camera 13 is switched from the first state to the second state (as shown in the lower part of FIG. 10).

It should be noted that, in a process of being switched from the first state to the second state, alternatively, the second motor 1221b may first drive the camera mounting member 121 to rotate upward to the second upper target position, and then the first motor 1221a drives the connecting rod 123 to rotate upward to the first upper target position. Alternatively, the first motor 1221a and the second motor 1221b may run simultaneously. This is not limited in embodiments of the present disclosure.

When the camera 13 needs to be used, if the camera 13 is currently in the second state, the second motor 1221b drives the camera mounting member 121 to rotate downward to the first lower target position (as shown in the middle part of FIG. 10). Then, the first motor 1221a drives the connecting rod 123 to rotate downward to the second lower target position, and the camera 13 is switched from the second state to the first state.

It should be noted that, in a process of being switched from the second state to the first state, alternatively, the first motor 1221a may first drive the connecting rod 123 to rotate downward to the second lower target position, and then the second motor 1221b drives the camera mounting member 121 to rotate downward to the first lower target position. Alternatively, the first motor 1221a and the second motor 1221b may run simultaneously. This is not limited in embodiments of the present disclosure.

In addition to the electric driving mechanisms, in some other examples, the first driving mechanism 122a and the second driving mechanism 122b may alternatively be elastic driving mechanisms. In this case, the first driving mechanism 122a and the second driving mechanism 122b are only configured to drive the camera mounting member 121 to be switched from the second state to the first state, and a force for switching the camera mounting member 121 from the first state to the second state needs to be provided by the person in the vehicle.

For example, as shown in FIG. 11, the first driving mechanism 122a includes a first rotating shaft 12211a and a first torsion spring 1224a, and the second driving mechanism 122b includes a second rotating shaft 12211b and a second torsion spring 1224b. The connecting rod 123 is rotatably connected to the support member 11 through the first rotating shaft 12211a. The first torsion spring 1224a is sleeved on the first rotating shaft 12211a, and two torsion arms respectively press against the support member 11 and the connecting rod 123. The camera mounting member 121 is rotatably connected to the connecting rod 123 through the second rotating shaft 12211b. The second torsion spring 1224b is sleeved on the second rotating shaft 12211b, and two torsion arms respectively press against the connecting rod 123 and the camera mounting member 121. The support member 11 has a first latch 112, and the camera mounting member 121 has a second latch 1212. The first latch 112 and the second latch 1212 are unlocked in the first state, and the first latch 112 and the second latch 1212 are locked in the second state.

With reference to FIG. 11, the following describes an example of a process in which the camera 13 is switched between the first state and the second state.

When the camera 13 does not need to be used, if the camera 13 is currently in the first state (as shown in the upper part of FIG. 11), the person in the vehicle presses the camera mounting member 121, the camera mounting member 121 drives the connecting rod 123 to rotate upward, and the connecting rod 123 drives the first torsion spring 1224a to store energy until the connecting rod 123 rotates upward to the first upper target position (as shown in a middle part of FIG. 11). Then, the person in the vehicle continues to press the camera mounting member 121, and the camera mounting member 121 drives the second torsion spring 1224b to store energy until the camera mounting member 121 rotates to the second upper target position. In this case, the first latch 112 and the second latch 1212 are locked, and the camera 13 is switched to the second state (as shown in the lower part of FIG. 11).

In some examples, to implement that when the person in the vehicle presses the camera mounting member 121, the connecting rod 123 first rotates around the first rotating shaft 12211a, and then the camera mounting member 121 rotates around the second rotating shaft 12211b, an elastic force of the first torsion spring 1224a is less than an elastic force of the second torsion spring 1224b.

When the camera 13 needs to be used, if the camera 13 is currently in the second state, the person in the vehicle presses the camera mounting member 121, and the first latch 112 and the second latch 1212 are unlocked. The first torsion spring 1224a drives the connecting rod 23 to rotate downward, and the second torsion spring 1224b drives the camera mounting member 121 to rotate downward until the connecting rod 123 rotates downward to the first lower target position and the camera mounting member 121 rotates downward to the second lower target position, so that the camera 13 is switched to the first state.

In some examples, to improve stability of the connecting rod 123 and the camera mounting member 121 during rotation, a guide groove may be provided on the support member 11, and the connecting rod 123 and the camera mounting member 121 may slide along the guide groove during rotation.

In addition to the foregoing classification based on the motion forms of the camera 13, the height adjustment mechanism 12 may alternatively be classified as an electric height adjustment mechanism 12 and a manual height adjustment mechanism 12 based on power sources. The following separately provides examples for description.
(1) In some examples, the height adjustment mechanism 12 is electric. The height adjustment mechanism 12 is configured to drive the camera 13 to be switched from the first state to the second state and be switched from the second state to the first state.

For example, the height adjustment mechanism 12 includes at least a motor 1221 (or a first motor 1221a and a second motor 1221b) and a camera mounting member 121, and the motor 1221 can drive the camera mounting member 121, to implement state switching of the camera 13. FIG. 2, FIG. 6, FIG. 8, and FIG. 10 show specific implementations of the electric height adjustment mechanism 12.

For the electric height adjustment mechanism 12, a position of the camera 13 in the first state may be set to a fixed position, or may be set to be adjusted according to a requirement of the person in the vehicle. For example, the person in the vehicle may adjust the position of the camera 13 in the first state by controlling a rotation amplitude of the motor 1221. In this way, image shooting angles and image shooting heights of the camera 13 can meet requirements of different persons in the vehicle.

(2) In some examples, the height adjustment mechanism 12 is manual. The height adjustment mechanism 12 is configured to drive the camera 13 to be switched from the second state to the first state, and a force for switching the camera 13 from the first state to the second state needs to be manually provided by the person in the vehicle.

For example, the height adjustment mechanism 12 includes an elastic driving member. The support member 11 has a first latch 112, and a camera mounting member 121 has a second latch 1212. When the camera mounting member 121 is pressed in the first state, the camera mounting member 121 drives the elastic driving member to store energy until the first latch 112 and the second latch 1212 are locked, and the camera 13 is switched to the second state. When the camera mounting member 121 is pressed in the second state, the first latch 112 and the second latch 1212 are unlocked, and the elastic driving member drives the camera mounting member 121 to drive the camera 13 to be switched to the first state.

FIG. 3 to FIG. 5, FIG. 7, FIG. 9, and FIG. 11 show specific implementations of the manual height adjustment mechanism 12. Correspondingly, the elastic driving member is an elastic member 1223, a torsion spring 1224, or a first torsion spring 1224a and a second torsion spring 1224b.

An embodiment of the present disclosure further provides a camera mounting bracket. As shown in FIG. 2 to FIG. 12, the camera mounting bracket includes a support member 11 and a height adjustment mechanism 12. The support member 11 is configured to be fastened to a top of a cockpit of a vehicle. The height adjustment mechanism 12 has a camera mounting member 121. The camera mounting member 121 is configured to mount the camera 13. The height adjustment mechanism 12 is configured to implement switching of the camera mounting member 121 between a first state and a second state. A height of the camera mounting member 121 in the first state is lower than a height of the camera mounting member 121 in the second state, and in the first state, the camera mounting member 121 is lower than an internal rear-view mirror 3 of the vehicle.

According to the technical solutions provided in embodiments of the present disclosure, the camera 13 is mounted by using the camera mounting bracket, so that when image shooting is required, the camera mounting member 121 may be switched to the first state through the height adjustment mechanism 12. Because the camera mounting member 121 in the first state is lower than the internal rear-view mirror 3 of the vehicle, the camera 13 can perform image shooting at a good image shooting angle, and a high-quality image of a person in the vehicle can be obtained.

When image shooting is not required, the camera mounting member 121 may be switched to the second state through the height adjustment mechanism 12, so that impact of the camera mounting bracket and the camera 13 on a field of view of the person in the vehicle can be reduced.

In some examples, the support member 11 is configured to be fastened to a side that is of the internal rear-view mirror 3 and that faces away from a mirror face.

In some examples, the support member 11 is configured to be fastened to a front windshield 2 of the vehicle.

In some examples, the support member 11 is configured to be fastened to a mirror rod 31 of the internal rear-view mirror 3.

In some examples, the support member 11 is a bracket.

In some examples, the support member 11 includes a housing, and the support member 11 has a cavity configured to accommodate the height adjustment mechanism 12. In the first state, the camera mounting member 121 is located outside the housing, and in the second state, the camera mounting member is located inside the housing.

In some examples, when the camera 13 is mounted on the camera mounting member 121, in the first state, the camera 13 faces the rear of the vehicle.

In some examples, when the camera 13 is mounted on the camera mounting member 121, in the first state, a difference between a height of the internal rear-view mirror 3 and the height of the camera 13 is less than 100 mm.

In some examples, when the camera 13 is mounted on the camera mounting member 121, in the first state, the camera 13 is flush with an eyellipse.

In some examples, the camera mounting member 121 in the first state protrudes toward the rear of the vehicle relative to the camera mounting member 121 in the second state.

In some examples, when the camera 13 is mounted on the camera mounting member 121, in the second state, the camera 13 is blocked.

In some examples, when the camera 13 is mounted on the camera mounting member 121, in the second state, the camera 13 is hidden.

In some examples, the height adjustment mechanism 12 includes a camera mounting member 121 and a driving mechanism 122. The camera mounting member 121 is slidably connected to the support member 11. The driving mechanism 122 is separately connected to the support member 11 and the camera mounting member 121, and the driving mechanism 122 is configured to drive the camera mounting member 121 to slide.

In some examples, a sliding direction of the camera mounting member 121 is inclined relative to a vertical direction, and the camera mounting member 121 gradually approaches the rear of the vehicle in a process in which the camera mounting member 121 slides from the second state to the first state.

In some examples, an included angle between the sliding direction of the camera mounting member 121 and a horizontal plane is greater than 15° and less than 45°.

In some examples, a sliding direction of the camera mounting member 121 is a vertical direction.

In some examples, the driving mechanism 122 includes a motor 1221 and a lifting mechanism 1222. The motor 1221 is fastened to the support member 11, and is connected to the camera mounting member 121 through the lifting mechanism 1222.

In some examples, the lifting mechanism 1222 includes a lead screw 12221 and a nut 12222. The lead screw 12221 is in a transmission connection to the motor 1221, and the lead screw 12221 is parallel to the sliding direction of the camera mounting member 121. The nut 12222 is fastened to the camera mounting member 121 and cooperates with the lead screw 12221.

In some examples, the driving mechanism 122 includes an elastic member 1223, and two ends of the elastic member 1223 respectively press against the support member 11 and the camera mounting member 121. The support member 11 has a first latch 112, and the camera mounting member 121 has a second latch 1212.

The driving mechanism 122 is configured, so that when the camera mounting member 121 is pressed in the first state, the camera mounting member 121 pushes the elastic member 1223 to compress until the first latch 112 and the second latch 1212 are locked, and the camera mounting member 121 is switched to the second state; or when the camera mounting member 121 is pressed in the second state, the first latch 112 and the second latch 1212 are unlocked, and the elastic member 1223 drives the camera mounting member 121 to slide to the first state.

In some examples, the height adjustment mechanism 12 includes a camera mounting member 121 and a driving mechanism 122. The camera mounting member 121 is connected to the support member 11 through the driving mechanism 122, and the driving mechanism 122 is configured to drive the camera mounting member 121 to rotate.

In some examples, the driving mechanism 122 includes a motor 1221, the motor 1221 is fastened to the support member 11, and a rotating shaft 12211 of the motor 1221 is fastened to the camera mounting member 121.

In some examples, the driving mechanism 122 includes a rotating shaft 12211 and a torsion spring 1224. The camera mounting member 121 is rotatably connected to the support member 11 through the rotating shaft 12211. The torsion spring 1224 is sleeved on the rotating shaft 12211, and the two torsion arms respectively press against the support member 11 and the camera mounting member 121. The support member 11 has a first latch 112, and the camera mounting member 121 has a second latch 1212.

The driving mechanism 122 is configured, so that when the camera mounting member 121 is pressed in the first state, the camera mounting member 121 drives the torsion spring 1224 to store energy until the first latch 112 and the second latch 1212 are locked, and the camera mounting member 121 is switched to the second state; or when the camera mounting member 121 is pressed in the second state, the first latch 112 and the second latch 1212 are unlocked, and the torsion spring 1224 drives the camera mounting member 121 to rotate to the first state.

In some examples, the height adjustment mechanism 12 includes a camera mounting member 121, a first driving mechanism 122a, a second driving mechanism 122b, and a connecting rod 123. The camera 13 is fastened to the camera mounting member 121. The first driving mechanism 122a is disposed on the support member 11, and is connected to the second driving mechanism 122b through the connecting rod 123. The first driving mechanism 122a is configured to drive the connecting rod 123 to rotate. The second driving mechanism 122b is in a transmission connection to the camera mounting member 121, and the second driving mechanism 122b is configured to drive the camera mounting member 121 to rotate. In the first state, the connecting rod 123 rotates upward to a first upper target position, and the camera mounting member 121 rotates upward to a second upper target position. In the second state, the connecting rod 123 rotates downward to a first lower target position, and the camera mounting member 121 rotates downward to a second lower target position.

In some examples, the first driving mechanism 122a includes a first motor 1221a, and the second driving mechanism 122b includes a second motor 1221b. The first motor 1221a is fastened to the support member 11, and a first rotating shaft 12211a of the first motor 1221a is fastened to the connecting rod 123. The second motor 1221b is disposed on the connecting rod 123, and a second rotating shaft 12211b of the second motor 1221b is fastened to the camera mounting member 121.

In some examples, the first driving mechanism 122a includes a first rotating shaft 12211a and a first torsion spring 1224a, and the second driving mechanism 122b includes a second rotating shaft 12211b and a second torsion spring 1224b. The connecting rod 123 is rotatably connected to the support member 11 through the first rotating shaft 12211a. The first torsion spring 1224a is sleeved on the first rotating shaft 12211a, and two torsion arms respectively press against the support member 11 and the connecting rod 123. The camera mounting member 121 is rotatably connected to the connecting rod 123 through the second rotating shaft 12211b. The second torsion spring 1224b is sleeved on the second rotating shaft 12211b, and two torsion arms respectively press against the connecting rod 123 and the camera mounting member 121. The support member 11 has a first latch 112, and the camera mounting member 121 has a second latch 1212. The first latch 112 and the second latch 1212 are unlocked in the first state, and the first latch 112 and the second latch 1212 are locked in the second state.

It should be noted that, for specific content of the camera mounting bracket, refer to related content of the vehicle-mounted camera module 1, and details are not described herein again.

An embodiment of the present disclosure further provides a vehicle. The vehicle has the foregoing vehicle-mounted camera module 1 or the foregoing camera mounting bracket.

In some examples, the vehicle-mounted camera module 1 or the support member 11 of the camera mounting bracket is fastened to a side that is of the internal rear-view mirror 3 and that faces away from a mirror face. For example, the support member 11 is fastened to the front windshield 2 of the vehicle, or the support member 11 is configured to be fastened to the mirror rod 31 of the internal rear-view mirror 3.

Terms used in implementations of the present disclosure are merely used to explain embodiments of the present disclosure, but are not intended to limit the present disclosure. Unless otherwise defined, technical terms or scientific terms used in implementations of the present disclosure should have the common meanings understood by a person of ordinary skill in the art to which the present disclosure pertains. The terms "first", "second", and the like used in the specification and claims of the present disclosure do not indicate any order, quantity, or importance, but are merely intended to distinguish between different constituents. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. Terms such as "up", "down", "left", and "right" merely indicate relative positional relationships. When an absolute position of an object described changes, the relative positional relationships may also change accordingly. "A plurality of" means two or more, unless otherwise expressly limited.

The foregoing descriptions are merely optional embodiments of the present disclosure, but are not intended to limit the present disclosure. Any modification, equivalent replacement, improvement, or the like made within the principle of the present disclosure should fall within the protection scope of the present disclosure.

## Claims

1. A vehicle-mounted camera module, wherein the vehicle-mounted camera module comprises a support member (11), a height adjustment mechanism (12), and a camera (13);
the support member (11) is configured to be fastened to a top of a cockpit of a vehicle;
the camera (13) is connected to the support member (11) through the height adjustment mechanism (12), and the height adjustment mechanism (12) is configured to implement switching of the camera (13) between a first state and a second state; and
a height of the camera (13) in the first state is lower than a height of the camera (13) in the second state, and in the first state, the camera (13) is lower than an internal rear-view mirror (3) of the vehicle.

2. The vehicle-mounted camera module according to claim 1, wherein the support member (11) is configured to be fastened to a side that is of the internal rear-view mirror (3) and that faces away from a mirror face.

3. The vehicle-mounted camera module according to claim 1 or 2, wherein in the first state, a difference between a height of the internal rear-view mirror (3) and the height of the camera (13) is less than 100 mm.

4. The vehicle-mounted camera module according to any one of claims 1 to 3, wherein in the first state, the camera (13) is flush with an eyellipse.

5. The vehicle-mounted camera module according to any one of claims 1 to 4, wherein the camera (13) in the first state protrudes toward the rear of the vehicle relative to the camera (13) in the second state.

6. The vehicle-mounted camera module according to any one of claims 1 to 5, wherein in the first state, the camera (13) is located below the internal rear-view mirror (3).

7. The vehicle-mounted camera module according to any one of claims 1 to 6, wherein in the second state, the camera (13) is blocked.

8. The vehicle-mounted camera module according to any one of claims 1 to 7, wherein in the second state, the camera (13) is in a hidden state.

9. The vehicle-mounted camera module according to any one of claims 1 to 8, wherein the height adjustment mechanism (12) comprises a camera mounting member (121) and a driving mechanism (122);
the camera mounting member (121) is slidably connected to the support member (11), the driving mechanism (122) is separately connected to the support member (11) and the camera mounting member (121), and the driving mechanism (122) is configured to drive the camera mounting member (121) to slide; and
the camera (13) is fastened to the camera mounting member (121).

10. The vehicle-mounted camera module according to claim 9, wherein a sliding direction of the camera mounting member (121) is inclined relative to a vertical direction, and the camera (13) gradually slides toward the rear of the vehicle in a process in which the camera (13) slides from the second state to the first state.

11. The vehicle-mounted camera module according to claim 9, wherein a sliding direction of the camera mounting member (121) is a vertical direction.

12. The vehicle-mounted camera module according to any one of claims 9 to 11, wherein the driving mechanism (122) comprises a motor (1221) and a lifting mechanism (1222); and
the motor (1221) is fastened to the support member (11), and is connected to the camera mounting member (121) through the lifting mechanism (1222).

13. The vehicle-mounted camera module according to claim 12, wherein the lifting mechanism (1222) comprises a lead screw (12221) and a nut (12222);
the lead screw (12221) is in a transmission connection to the motor (1221), and the lead screw (12221) is parallel to the sliding direction of the camera mounting member (121); and
the nut (12222) is fastened to the camera mounting member (121) and cooperates with the lead screw (12221).

14. The vehicle-mounted camera module according to any one of claims 9 to 11, wherein the driving mechanism (122) comprises an elastic member (1223), and two ends of the elastic member (1223) respectively press against the support member (11) and the camera mounting member (121);
the support member (11) has a first latch (112), and the camera mounting member (121) has a second latch (1212); and
the driving mechanism (122) is configured, so that
when the camera mounting member (121) is pressed in the first state, the camera mounting member (121) pushes the elastic member (1223) to compress until the first latch (112) and the second latch (1212) are locked, and the camera (13) is switched to the second state; or
when the camera mounting member (121) is pressed in the second state, the first latch (112) and the second latch (1212) are unlocked, and the elastic member (1223) drives the camera (13) to slide to the first state.

15. The vehicle-mounted camera module according to any one of claims 1 to 8, wherein the height adjustment mechanism (12) comprises a camera mounting member (121) and a driving mechanism (122);
the camera mounting member (121) is connected to the support member (11) through the driving mechanism (122), and the driving mechanism (122) is configured to drive the camera mounting member (121) to rotate; and
the camera (13) is fastened to the camera mounting member (121).

16. The vehicle-mounted camera module according to claim 15, wherein the driving mechanism (122) comprises a motor (1221), the motor (1221) is fastened to the support member (11), and a rotating shaft (12211) of the motor (1221) is fastened to the camera mounting member (121).

17. The vehicle-mounted camera module according to claim 15, wherein the driving mechanism (122) comprises a rotating shaft (12211) and a torsion spring (1224);
the camera mounting member (121) is rotatably connected to the support member (11) through the rotating shaft (12211), the torsion spring (1224) is sleeved on the rotating shaft (12211), and two torsion arms respectively press against the support member (11) and the camera mounting member (121);
the support member (11) has a first latch (112), and the camera mounting member (121) has a second latch (1212); and
the driving mechanism (122) is configured, so that
when the camera mounting member (121) is pressed in the first state, the camera mounting member (121) drives the torsion spring (1224) to store energy until the first latch (112) and the second latch (1212) are locked, and the camera (13) is switched to the second state; or
when the camera mounting member (121) is pressed in the second state, the first latch (112) and the second latch (1212) are unlocked, and the torsion spring (1224) drives the camera (13) to rotate to the first state.

18. The vehicle-mounted camera module according to any one of claims 1 to 8, wherein the height adjustment mechanism (12) comprises a camera mounting member (121), a first driving mechanism (122a), a second driving mechanism (122b), and a connecting rod (123);
the camera (13) is fastened to the camera mounting member (121);
the first driving mechanism (122a) is disposed on the support member (11), and is connected to the second driving mechanism (122b) through the connecting rod (123), and the first driving mechanism (122a) is configured to drive the connecting rod (123) to rotate;
the second driving mechanism (122b) is in a transmission connection to the camera mounting member (121), and the second driving mechanism (122b) is configured to drive the camera mounting member (121) to rotate;
in the first state, the connecting rod (123) rotates downward to a first lower target position, and the camera mounting member (121) rotates downward to a second lower target position; and
in the second state, the connecting rod (123) rotates upward to a first upper target position, and the camera mounting member (121) rotates upward to a second upper target position.

19. The vehicle-mounted camera module according to claim 18, wherein the first driving mechanism (122a) comprises a first motor (1221a), and the second driving mechanism (122b) comprises a second motor (1221b);
the first motor (1221a) is fastened to the support member (11), and a first rotating shaft (12211a) of the first motor (1221a) is fastened to the connecting rod (123); and
the second motor (1221b) is disposed on the connecting rod (123), and a second rotating shaft (12211b) of the second motor (1221b) is fastened to the camera mounting member (121).

20. The vehicle-mounted camera module according to claim 18, wherein the first driving mechanism (122a) comprises a first rotating shaft (12211a) and a first torsion spring (1224a), and the second driving mechanism (122b) comprises a second rotating shaft (12211b) and a second torsion spring (1224b);
the connecting rod (123) is rotatably connected to the support member (11) through the first rotating shaft (12211a), the first torsion spring (1224a) is sleeved on the first rotating shaft (12211a), and two torsion arms respectively press against the support member (11) and the connecting rod (123);
the camera mounting member (121) is rotatably connected to the connecting rod (123) through the second rotating shaft (12211b), the second torsion spring (1224b) is sleeved on the second rotating shaft (12211b), and two torsion arms respectively press against the connecting rod (123) and the camera mounting member (121); and
the support member (11) has a first latch (112), the camera mounting member (121) has a second latch (1212), the first latch (112) and the second latch (1212) are unlocked in the first state, and the first latch (112) and the second latch (1212) are locked in the second state.

21. A camera mounting bracket, wherein the camera mounting bracket comprises a support member (11) and a height adjustment mechanism (12);
the support member (11) is configured to be fastened to a top of a cockpit of a vehicle;
the height adjustment mechanism (12) has a camera mounting member (121), the camera mounting member (121) is configured to mount a camera (13), and the height adjustment mechanism (12) is configured to implement switching of the camera mounting member (121) between a first state and a second state; and
a height of the camera mounting member (121) in the first state is lower than a height of the camera mounting member (121) in the second state, and in the first state, the camera mounting member (121) is lower than an internal rear-view mirror (3) of the vehicle.

22. The camera mounting bracket according to claim 21, wherein the height adjustment mechanism (12) comprises the camera mounting member (121) and a driving mechanism (122); and
the camera mounting member (121) is slidably connected to the support member (11), the driving mechanism (122) is separately connected to the support member (11) and the camera mounting member (121), and the driving mechanism (122) is configured to drive the camera mounting member (121) to slide.

23. The camera mounting bracket according to claim 22, wherein a sliding direction of the camera mounting member (121) is inclined relative to a vertical direction, and the camera mounting member (121) gradually approaches the rear of the vehicle in a process in which the camera mounting member (121) slides from the second state to the first state.

24. A vehicle, wherein the vehicle comprises the vehicle-mounted camera module according to any one of claims 1 to 20, or the camera mounting bracket according to any one of claims 21 to 23.
